# EUROPÄISCHE PATENTSCHRIFT

(11) **EP 1 256 796 B1**
(45) Veröffentlichungstag und Bekanntmachung des Hinweises auf die Patenterteilung: **09.12.2009**
(21) Anmeldenummer: 02010492.3
(22) Anmeldetag: 08.05.2002
(51) Int. Cl.: G01N 21/64

(54) **Vorrichtung zur Erfassung der Konzentration einer fluoreszierenden Substanz in einem Fluid, insbesondere in einem Kraftstoff**
Device for determining the concentration of a fluorescent substance in a fluid, in particular in a fuel
Dispositif de mesure de la concentration d'une substance fluorescente dans un fluide, notamment dans un carburant

(30) Priorität: 08.05.2001 DE 10122109
(43) Veröffentlichungstag der Anmeldung: 13.11.2002
(73) Patentinhaber: MBR GmbH, D-58313 Herdecke (DE)
(72) Erfinder: Jungmann, Holger, Dr., 45896 Gelsenkirchen (DE); Schietzel, Michael, Dr., Herdecke (DE); Schmidt, Martin, Dr., Oberdorf (DE)
(74) Vertreter: Rössig, Rolf

(56) Entgegenhaltungen:
- WO-A-93/07472
- CHRISTMANN D R ET AL: "Automated Instrument for Absorption-Corrected Molecular Fluorescence Measurements by the Cell Shift Method" ANAL. CHEM., Bd. 53, 1981, Seiten 276-280, XP002267761
- PAGANO T E ET AL: "ASSESSMENT OF INNER FILTER EFFECTS IN FLUORESCENCE SPECTROSCOPY USING THE DUAL-PATHLENGTH METHOD - A STUDY OF THE JET FUEL JP-4" PROCEEDINGS OF THE SPIE, SPIE, BELLINGHAM, VA, US, Bd. 3856, 1999, Seiten 289-297, XP008000308 ISSN: 0277-786X

## Beschreibung

Die Erfindung betrifft eine Vorrichtung zur Erfassung, insbesondere Quantifizierung einer Stofffraktion in einer transluzenten Lösung, insbesondere in einem Kraftstoff.

Es ist bekannt, Kohlenwasserstoffe im Hinblick auf deren Verwendungszweck mit Zusatzstoffen zu versetzen. So ist es beispielsweise üblich, industriellen Alkohol mit Bitterstoffen, oder Mineralöle mit Farbstoffen zu versetzen. Mit Bitterstoffen versetzte Alkohole oder als Heizöle eingefärbte Mineralöle unterliegen einer niedrigeren Besteuerung und sind daher im Handel zu geringeren Kosten erhältlich als die unverbitterten bzw. ungefärbten, einer höheren Besteuerung unterliegenden Ausgangsstoffe. Durch Filter- oder Destillationsverfahren ist es jedoch möglich, die zugesetzten Stofffraktionen zu entfernen, so daß beispielsweise als Heizöl in den Verkehr gebrachtes Mineralöl nach einer Filterung nicht zuverlässig von besteuertem Dieselkraftstoff unterschieden werden kann.

Christmann et al. offenbaren in "Automated Instrument for Absorption-Corrected Molecular Fluorescence Measurements by the Cell Shift Method", Anal. Chem., Vol. 53, 276-280, 1981, eine Vorrichtung zur Erfassung der Konzentration einer fluoreszierenden Substanz in einem Fluid mit einer Zelle zur Aufnahme einer Probe des zu untersuchenden Fluids, einer Beleuchtungseinrichtung zur Einbringung eines Anregungslichtstrahls in die Zelle derart, dass in der Zelle ein von dem Lichtstrahl durchsetzter Fluidabschnitt und ein von dem Lichtstrahl nicht durchsetzter Fluidabschnitt gebildet wird, und einer Spektrometereinrichtung, wobei die Zelle derart relativ zur Beleuchtungseinrichtung und zur Spektrometereinrichtung verschiebbar ist, dass ein erstes Fluoreszenzspektrum in einem ersten Abstand von dem durchleuchteten Fluidabschnitt und ein zweites Fluoreszenzspektrum in einem zweiten, von dem ersten Abstand abweichenden Abstand von dem durchleuchteten Fluidabschnitt erfassbar ist. Ausserdem ist die Zelle derart verschiebbar, dass ein drittes Fluoreszenzspektrum in dem ersten Abstand von dem durchleuchteten Fluidabschnitt aber in einer anderen Entfernung entlang der Ausbreitungsrichtung des Anregungslichtstrahls als das erste Fluoreszenzspektrum erfassbar ist. Durch die Erfassung dieser verschiedenen Fluoreszenzspektren lassen sich der primäre innere Filtereffekt (Absorption der Anregungsstrahlung durch das Fluid) und der sekundäre innere Filtereffekt (Absorption der Fluoreszenzstrahlung durch das Fluid) berücksichtigen.

Der Erfindung liegt die Aufgabe zugrunde, ein Verfahren und eine Vorrichtung zu schaffen, durch welches bzw. durch welche ausgewählte fluoreszierende Stofffraktionen in organischen Fluiden, beispielsweise in Kraftstoffen rasch und auf zuverlässige Weise selbst in geringen Stoffkonzentrationen erfasst werden können.

Diese Aufgabe wird erfindungsgemäß gelöst durch eine Vorrichtung gemäß Anspruch 1.

Mit der erfindungsgemäßen Vorrichtung lassen sich herkunftsspezifische Zusatzstoffe in extrem geringer Konzentration in einem Kraftstoff zuverlässig und in einem kurzen Zeitraum von beispielsweise weniger als 30 Sekunden, nachweisen. Es können auch andere fluoreszierende Verbindungen beispielsweise Parfüme, alkoholhaltige Getränke, fluoreszierende Frostschutzmittel, Öle, Farben und Seifen von Nachahmungen oder unzulässig veränderten- beispielsweise verdünnten Varianten unterschieden werden. Die erfindungsgemäße Vorrichtung eignet sich auch allgemein zur Konzentrationsbestimmung fluoreszierender Substanzen in Lösungen mit hoher Eigenfluoreszenz.

Der zur Aufnahme der Probe vorgesehene Fluidraumabschnitt wird vorzugsweise durch eine Küvette gebildet, so daß der von dem Lichtstrahl in der Probe zurückgelegte Weg eine Länge im Bereich von 0.5 bis 50 mm aufweist. Es ist auch möglich, den abschnittsweise durchleuchteten Fluidraumabschnitt dadurch zu bilden, daß ein den Lichtstrahl abstrahlender Lichtaustrittsbereich als Analysekopf in das zu untersuchende Medium eingetaucht wird.

Erfindungsgemäß ist die Länge des von dem Lichtstrahl durchsetzten Abschnittes der Probe oder die Intensität des in die Probe eintretenden Lichtstrahles in einstellbarer Weise veränderbar. Es ist möglich, die Änderung der Intensität des in die Probe eintretenden Lichtstrahles durch Einstellung der Leistungsaufnahme der zur Generierung des Lichtstrahles vorgesehenen Lichtquelle vorzunehmen.

Alternativ hierzu - oder in besonders vorteilhafter Weise auch in Kombination mit dieser Maßnahme - ist es auch möglich, durch eine optische Filtereinrichtung die Intensität des in die Probe eindringenden Lichtstrahles abzustimmen, so daß der Lichtstrahl durch die Probe nahezu vollständig absorbiert werden kann.

Dadurch ist es möglich, durch die Probe selbst den Lichtstrahl derart weitgehend zu absorbieren, daß im Endbereich des Untersuchungsabschnittes das Fluoreszenzspektrum der Probe unter weitgehender Unterdrückung des Anregungsspektrums der Lichtquelle erfaßt werden kann. In diesem Zusammenhang ist es in vorteilhafter Weise möglich, Proben mit geringem Absorptionsgrad definiert einzutrüben bzw. mit einer Substanz deren Fluoreszenzspektrum bekannt ist, zu versetzen um innerhalb der Länge des Untersuchungsabschnittes eine ausreichende Strahlabsorption zu erhalten. Durch die hierbei erreichte Strahlabsorption wird es auch möglich, ein Fluoreszenzspektrum der Probe aufzunehmen, in welchem die in geringerer Konzentration vorhandene Fraktion nicht mehr auftritt. Die Länge des Untersuchungsraumes in Lichtstrahlausbreitungsrichtung ist mit Vorteil in einstellbarer Weise veränderbar.

Auf Grundlage des durch das Untersuchungsmedium gefilterten Lichtes wird es möglich, die Lichtquelle und vorzugsweise auch die in geringerer Konzentration vorhandene Stofffraktion in dem Rest-Fluoreszenzspektrums weitgehend zu unterdrücken. Im Zusammenspiel mit den erfindungsgemäß in unterschiedlichen Abständen vom lichtdurchfluteten Probenabschnitt aufgenommenen Fluoreszenzspektren kann eine besonders hohe Bestimmungsgenauigkeit erreicht werden.

Vorteilhafte Ausgestaltungen dieser Vorrichtung sind Gegenstand der Unteransprüche.

Weitere Einzelheiten der Erfindung ergeben sich aus der nachfolgenden Beschreibung in Verbindung mit den Zeichnungen. Es zeigen:
- **Fig. 1**: eine Prinzipskizze zur Erläuterung einer bevorzugten Ausführungsform einer erfindungsgemäßen Vorrichtung zum Nachweis eines, einem Kraftstoff zugesetzten fluoreszierenden Markers;
- **Fig. 2**: ein Fluoreszenzspektrum eines Kraftstoffes für unterschiedliche Konzentrationen eines zugesetzten Markers;
- **Fig.3a**: eine Darstellung zur Erläuterung der Unterschiede zwischen einem Durchlichtspektrum und einem 90°-Spektrum
- **Fig. 3b**: mehrere Differenzspektren in Abhängigkeit vom Meßabstand X für eine Markerkonzentration.

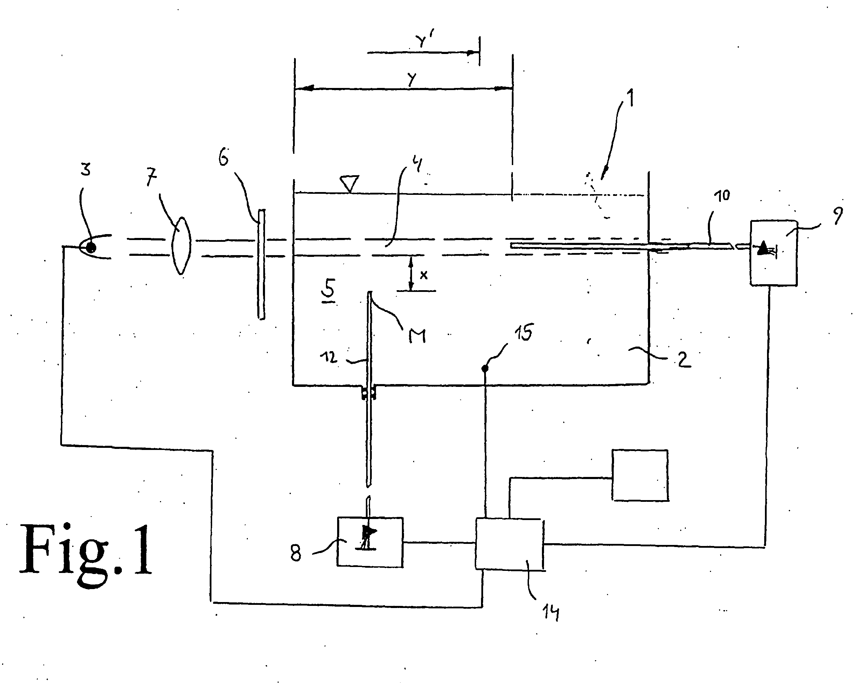

Fig. 1 zeigt vereinfacht den Aufbau einer erfindungsgemäßen Vorrichtung mit einem Probeaufnahmeraum 1 der hier durch eine Küvette gebildet ist. Der Probeaufnahmeraum weist bei diesem Beispiel eine Länge von ca. 18mm auf und hat ein Fassungsvolumen von 0,8ml. In dem Probeaufnahmeraum 1 befindet sich eine zu untersuchende Probe 2, beispielsweise ein fluoreszierender Kraftstoff.

Der Probeaufnahmeraum 1 ist über eine Lichtquelle 3 derart durchleuchtbar, daß sich in diesem ein leuchtender Lichtwegabschnitt 4 und ein an diesen angrenzender, außerhalb des Strahlweges liegender, nicht durchleuchteter Probenabschnitt 5 ergibt.

Die Intensität des in die Probe 2 eindringenden Lichtes ist durch Steuerung des Leistungsbezuges der Lichtquelle 3 sowie über eine Filtereinrichtung 6 einstellbar. Zur Fokussierung des Lichtes ist weiterhin eine Linseneinrichtung 7 vorgesehen.

Über eine erste Spektrometereinrichtung 8 ist es möglich, das Spektrum des sich bis zu einer ersten Meßstelle M in der Probe 2, quer zur Ausbreitungsrichtung des Lichtstrahles emittierten Fluoreszenzlichtes zu erfassen. Der Abstand der Meßstelle M von dem durchleuchteten Lichtwegabschnitt 4 der Probe 2 ist in einstellbarer Weise veränderbar. Bei dem gezeigten Ausführungsbeispiel kann der Abstand dadurch verändert werden, daß ein die Meßstelle M bildender stirnseitiger Endabschnitt eines Lichtleiters 12 in einstellbarer Weise an den Lichtwegabschnitt 4 heranführbar ist, oder von diesem entfernbar ist.

Über eine zweite Spektrometereinrichtung 9 ist es möglich, das sich in Richtung des Lichtwegabschnittes 4 ausbreitende Licht zu erfassen. Der Erfassungsort des sich in Richtung des Lichtwegabschnittes 4 ausbreitenden Lichtes oder auch die Intensität des die Probe 2 abschnittsweise durchleuchtenden Lichtes kann derart abgestimmt werden, daß sowohl das zur Anregung der Probe durch die Lichtquelle 3 emittierte Licht als auch das seitens einer, in der Probe 2 enthaltenden, nachzuweisenden Substanz emittierte Fluoreszenzlicht weitgehend durch die Probe 2 absorbiert wird. Hierdurch wird es möglich, über die zweite Spektrometereinrichtung 9 ein Fluoreszenzspektrum aufzunehmen, das im wesentlichen dem Fluoreszenzspektrum der Hauptfraktion der Probe 2 entspricht. Bei dem hier gezeigten Ausführungsbeispiel kann eine geeignete Länge des Lichtwegabschnittes 4 eingestellt werden, indem ein Lichtleiter 10 in einstellbarer Weise in den Lichtwegabschnitt 4 eingeschoben werden kann. Die Veränderung der Länge y des Lichtwegabschnittes 4 bis zum Abgriff des Fluoreszenzlichtes kann auch auf andere Weise erreicht werden.

Die seitens der ersten Spektrometereinrichtung 8 sowie auch die seitens der zweiten Spektrometereinrichtung 9 ermittelten Fluoreszenzspektren werden einer Auswertungseinrichtung 14 zugeführt.

Die Auswertungseinrichtung erfaßt bei diesem Ausführungsbeispiel weiterhin die Temperatur der Probe 2 über einen Temperatursensor 15, den Abstand x der Meßstelle M von dem Lichtwegabschnitt 4 sowie die Länge y des Lichtwegabschnittes 4 bis zum Abgriff des Fluoreszenzspektrums durch die zweite Spektrometereinrichtung 9. Die Intensität des durch die Lichtquelle 3 generierten Anregungslichtes wird ebenfalls seitens der Auswertungseinrichtung 14 erfasst.

Zur Bestimmung des Anteils einer fluoreszierenden Fraktion in der insgesamt fluoreszierenden Probe 2 werden seitens der Auswertungseinrichtung insbesondere die folgenden Analyseschritte abgearbeitet:
Zunächst wird eine geeignete Länge y' eingestellt, bei welcher das Anregungslicht der Lichtquelle 3 weitgehend durch die Probe 2 absorbiert ist. Fakultativ ist es möglich die Länge des Lichtwegabschnittes 4 auf ein Maß y zu vergrößern, bei welchem davon ausgegangen werden kann, daß die Zusatzfraktion in dem Fluoreszenzspektrum im wesentlichen nicht mehr auftaucht. Das bei dieser Systemeinstellung durch die zweite Spektometereinrichtung 9 erfasste Fluoreszenzspektrum wird in der Auswertungseinrichtung 14 abgespeichert.

Vorzugsweise simultan mit diesem Vorgang wird unter einem ersten Abstand x das Fluoreszenzspektrum des sich quer zum Lichtwegabschnitt 4 zur Meßstelle M hin ausbreitenden Fluoreszenzlichtes gemessen. Diese Messung wird für mehrere unterschiedliche Abstände x wiederholt, wobei die hierbei jeweils ermittelten Fluoreszenzspektren abgespeichert werden.

Die ermittelten Fluoreszenzspektren ermöglichen eine eindeutige Bestimmung der Konzentration einer in geringem Maße in der Probe 2 enthaltenen fluoreszierenden Substanz.

Diese Auswertung beruht auf dem Lösungskonzept, daß das sich quer zum Lichtwegabschnitt 4 in der Probe 2 ausbreitende Fluoreszenz-Licht durch die Probe selbst absorbiert wird. Die für unterschiedliche Wellenlängen des Fluoreszenzlichtes unterschiedlichen Absorptionsgrade führen zu Abweichungen zwischen den durch die erste Spektrometereinrichtung 8 (bei unterschiedlichen Abständen) erfaßten Fluoreszenzspektren. Diese Abweichungen sind eindeutig, (insbesondere hinsichtlich der Konzentration) wenn die Fluoreszenz des Markers deutlich geringer ist als die Fluoreszenz des Kraftstoffes. Das Verfahren eignet sich damit in besonderem Maße für solche geringen Marker Fluoreszenz Intensitäten, bei denen die Marker Fluoreszenz in der Gesamtfluoreszenz nahezu untergeht

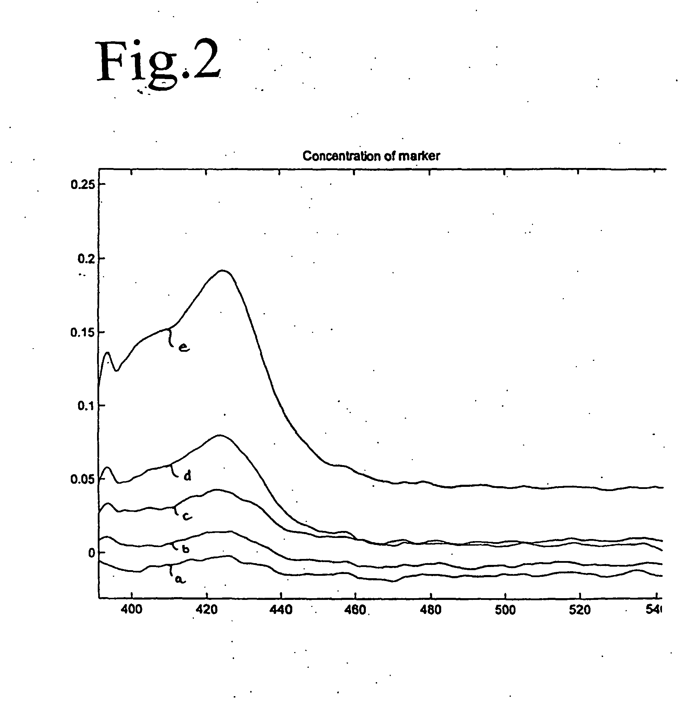

Fig. 2 zeigt eine Schar von Fluoreszenzspektren a bis e für unterschiedliche Konzentrationen eines fluoreszierenden Markers in einem Dieselkraftstoff. Auf der Abszisse sind hierbei die Wellenlängen aufgetragen. Auf der Ordinate ist die Fluoreszenzintensität aufgetragen. Der Graph e zeigt das Fluoreszenzspektrum bei einer Konzentration Q1. Die Graphen a bis d zeigen die Fluoreszenzintensität über der Wellenlänge bei Konzentrationen von 9,1%Q1, 16,6%Q1, 25,0%Q1, und 50,0%Q1.

Diese Fluoreszenzspektren ergeben sich bei einer Messung an einer, von dem unmittelbar durch den Lichtstrahl durchsetzten Probeabschnitt beabstandeten Meßstelle (Spektrometereinrichtung 8). Zu erkennen ist der für den untersuchten Marker charakteristische Peak der optischen Dichte bei einer Wellenlänge von ca. 420 nm.

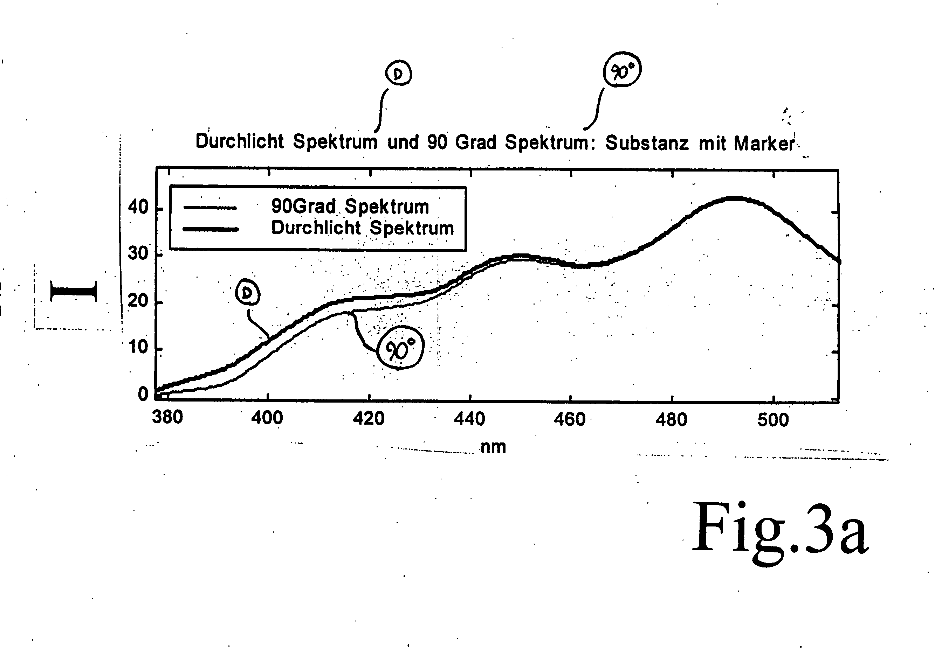

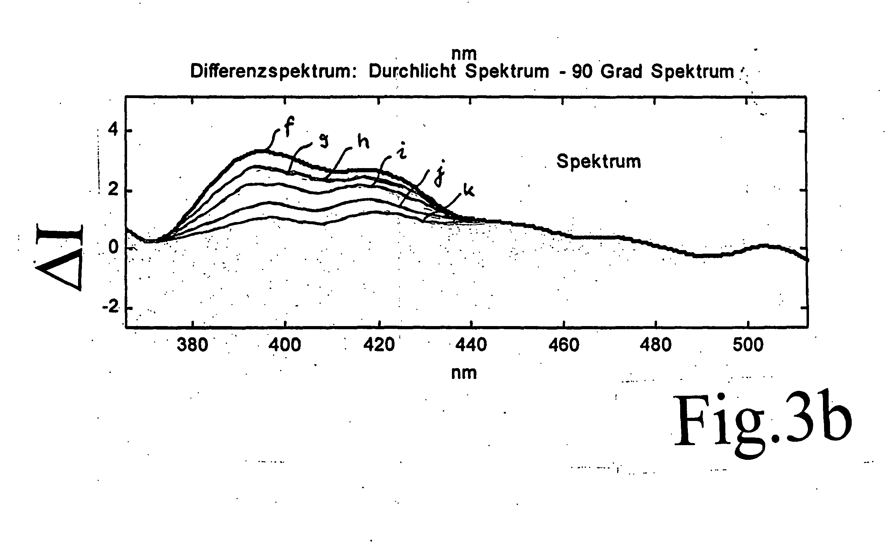

In Fig. 3b sind mehrere Differenzspektren f bis k dargestellt, die für zunehmende Abstände X von dem Lichtstrahlabschnitt 4 (Fig.1) durch die Spektrometereinrichtung 8 aufgezeichnet wurden. Aus dieser Schar an Fluoreszenzspektren f bis k kann in Verbindung mit dem für jedes Spektrum eingestellten Abstand X die Konzentration eines fluoreszierenden Markers in einem ebenfalls fluoreszierenden Fluid - hier Dieselkraftstoff- errechnet werden. Aus der Änderung der Fluoreszenzintensität an den unterschiedlichen Stellen ergibt sich die Absorption des Mediums wie nachfolgend unter Bezugnahme auf die Meßanordnung nach Fig. erläutert wird. Sei I0(λ) bzw. I1(λ) die eingestrahlte Anregungsintensität. E0(λ) bzw. E1(λ) die Intensität, die bei 9 ankommt. Wegen E0(λ)/10(λ) = exp(-εcd) (Lambert-Beersches Gesetz mit ε die Extinktionskonstante, c die Konzentration und d die Länge des Lichtweges) kann sofort εc, da d bekannt ist, ermittelt werden. Die optischen Eigenschaften der Lösung sind damit bekannt. Deshalb kann bei M aus den beiden Abständen x1 und x2 die Absorption der Markerfluoreszenz durch die Lösung durch εc(x1-x2) bestimmt werden. Aus der Änderung der Markerfluoreszenz bei x1 und x2 und bekanntem εc der Lösung ergibt sich nach Lambert-Beer eindeutig die Markerkonzentration.

Die Genauigkeit der Markerkonzentration entspricht im wesentlichen der Genauigkeit von εc. Die Einstrahlintensität 10(λ) ist nicht identisch mit der Intensität, mit welcher das eingestrahlte Licht in die Substanz eindringt. So wird in Abhängigkeit von den unterschiedlichen Brechungsindices der unterschiedlichen Lösungen unterschiedlich viel Licht reflektiert, das nicht in die Lösung gelangt. Aus der Differenzmessung bei 9 bei unterschiedlichen Intensitäten I0(λ) und I1(λ) kann durch Berechnung einer Korrekturfunktion diesem Umstand Rechnung getragen werden. Neben der Ermittlung der Markerfluoreszenz dient die Messung an 9 vorzugsweise der genauen Bestimmung von εc der Lösung. Diese Methode ist insbesondere dann, wenn εc + ε(Marker)*c(Marker) ≈ εc, wenn der Marker also einen kleinen Anteil an der Gesamtabsorption hat, besonders genau. Damit eignet sich dieses Verfahren insbesondere für die quantitative Bestimmung geringer Markerkonzentrationen.

Der zur Aufzeichnung des Fluoreszenzspektrums f eingestellte Abstand X beträgt 0,8mm. Der Abstand X bei der Aufzeichnung des Fluoreszenzspektrums k beträgt 12mm. Die bei der Aufzeichnung der Spektren g bis j eingestellten Abstände liegen in gleichmäßigen Intervallen zwischen diesen Randwerten.

Die Lichtquelle kann vorzugsweise durch eine im Handel erhältliche Diode gebildet sein, wobei die Auswahl der Diode derart getroffen wird, daß deren Licht einen vorgegebenen Abstand zu der Wellenlänge hat, bei welcher das Fluoreszenzmaximum der hinsichtlich ihrer Konzentration zu bestimmenden, fluoreszierenden Substanz liegt.

## Patentansprüche

1. Vorrichtung zur Erfassung der Konzentration einer fluoreszierenden Substanz in einem Fluid mit:
- einem Untersuchungsraum (1) zur Aufnahme einer Probe (2) des zu untersuchenden Fluides,
- einer Beleuchtungseinrichtung (3) zur Einbringung eines Lichtstrahles in den Untersuchungsraum derart, dass in dem Untersuchungsraum ein von dem Lichtstrahl durchsetzter Fluidabschnitt (4) und ein von dem Lichtstrahl nicht durchsetzter Fluidabschnitt gebildet wird,
- einer ersten, mit einem Lichtleiter verbundenen Spektrometereinrichtung (8) zur Erfassung eines Fluoreszenzspektrums im Rahmen eines ersten Messschrittes an einer Messstelle (M) die durch einen stirnseitigen Endabschnitt des Lichtleiters (12) gebildet ist in einem ersten Abstand (x) von dem, von dem Lichtstrahl durchsetzten Fluidabschnitt (4) sowie zur Erfassung wenigstens eines weiteren Fluoreszenzspektrums in einem zweiten, von dem ersten Abstand (x) abweichenden Abstand von dem durchleuchteten Fluidabschnitt (4),
- einer zweiten Spektrometereinrichtung (9) zur Erfassung von Licht das sich in Richtung des Lichtwegabschnittes (4) ausbreitet, wobei der Erfassungsort des sich in Richtung des Lichtwegabschnittes (4) ausbreitenden Lichtes oder auch die Intensität des die Probe (2) abschnittsweise durchleuchtenden Lichtes derart abstimmbar ist, dass sowohl das zur Anregung der Probe durch die Lichtquelle 3 emittierte Licht als auch das seitens der in der Probe (2) enthaltenden, nachzuweisenden Substanz emittierte Fluoreszenzlicht weitgehend durch die Probe (2) absorbiert wird, und
- einer Auswertungseinrichtung (14) zur Auswertung der erfassten unterschiedlichen Fluoreszenzspektren, zur Ermittlung der Konzentration der fluoreszierenden Substanz auf Grundlage der Abweichungen der wenigstens zwei in unterschiedlichen Abständen von dem Lichtstrahl ermittelten Fluoreszenzspektren, sowie des durch die zweite Spektrometereinrichtung (9) erfassten Spektrums.

2. Vorrichtung nach Anspruch 1, **dadurch gekennzeichnet, dass** das Licht des Lichtstrahles eine Wellenlänge im Bereich von 300 bis 450 nm, insbesondere 385 bis 395 nm, hat

3. Vorrichtung nach einem der Ansprüche 1 oder 2, **dadurch gekennzeichnet, dass** der Lichtstrahl einen Durchmesser im Bereich von 0,5 bis 4mm hat.

4. Vorrichtung nach einem der Ansprüche 1 bis 3, **dadurch gekennzeichnet, dass** das Licht durch eine Diodeneinrichtung generiert wird.

5. Vorrichtung nach einem der Ansprüche 1 bis 4, **dadurch gekennzeichnet, dass** der Untersuchungsraum durch eine Küvette gebildet ist.

6. Vorrichtung nach einem der Ansprüche 1 bis 5, **dadurch gekennzeichnet, dass** die in Lichtstrahlausbreitungsrichtung gemessene Länge des Untersuchungsraumes in einstellbarer Weise veränderbar ist.

7. Vorrichtung nach einem der Ansprüche 1 bis 6, **dadurch gekennzeichnet, dass** die Intensität der Lichtquelle in einstellbarer Weise veränderbar ist.

## Claims

1. Device for determining the concentration of a fluorescent substance in a fluid comprising:
- an examination chamber (1) for the admission of a sample (2) of the fluid which has to be examined,
- a lighting device (3) for insertion of a light beam in the examination chamber in such a way that a fluid section (4) crossed by the light beam and a fluid section not crossed by the light beam are formed in the examination chamber,
- a first spectrometer device (8) connected with a light guide for the detection of a fluorescence spectrum within the scope of a first measuring step at a measuring point (M) which is formed by a frontal end section of the light guide (12) at a first distance (x) from the fluid section (4) crossed by the light beam as well as for the detection of at least one further fluorescence spectrum at a second distance (x) deviating from the first distance of the lighted fluid section (4),
- a second spectrometer device (9) for the detection of light which spreads towards the light path section (4), in which the detection place of the light spreading towards the light path section (4) or also the intensity of the light passing sectionally through the sample (2) being adjustable in such a way that both the light emitted by the light source 3 to stimulate the sample and also the fluorescent light emitted by the substance to be tested, contained in the sample (2), are widely absorbed by the sample (2), and
- an evaluation device (14) for evaluating the detected different fluorescence spectra, for determining the concentration of the fluorescent substance on the basis of the variations of the at least two fluorescence spectra detected at different intervals by the light beam, as well as of the spectrum detected by the second spectrometer device (9).

2. Device according to claim 1, **characterised in that** the light of the light beam has a wavelength in the range of 300 to 450 nm, especially of 385 to 395 nm.

3. Device according to one of the claims 1 or 2 **characterised in that** the light beam has a diameter in the range of 0,5 to 4 mm.

4. Device according to one of the claims 1 to 3 **characterised in that** the light is generated by a diode device.

5. Device according to one of the claims 1 to 4 **characterised in that** the examination chamber is formed by a cuvette.

6. Device according to one of the claims 1 to 5 **characterised in that** the length of the examination chamber measured in the direction of light beam propagation is changeable in an adjustable way.

7. Device according to one of the claims 1 to 6 **characterised in that** the intensity of the light source is changeable in an adjustable way.

## Revendications

1. Dispositif de mesure de la concentration d'une substance fluorescente dans un fluide au moyen de :
- un local d'examen (1) pour la réception d'un échantillon (2) du fluide à examiner,
- un dispositif d'éclairage (3) pour l'introduction d'un faisceau lumineux dans le local d'examen de telle façon que dans le local d'examen sont formées une section de fluide traversée par le faisceau lumineux (4) et une section de fluide qui n'est pas traversée par le faisceau lumineux,
- un premier dispositif de spectromètre (8) relié à un conduit de lumière pour la détection d'un spectre de fluorescence dans le cadre d'une première phase de mesure dans un point de mesure (M) qui est formé par une section terminale frontale du conduit de lumière (12), à une première distance (x) de la section de fluide (4) traversée par le faisceau lumineux ainsi que pour la détection d'au moins un ultérieur spectre de fluorescence à une deuxième distance qui diffère de la première distance (x), de la section de fluide illuminée (4),
- un deuxième dispositif de spectromètre (9) pour la détection de lumière qui se propage dans la direction de la section de chemin optique (4), où le lieu de détection de la lumière qui se propage dans la direction de la section de chemin optique (4) ou bien l'intensité de la lumière qui traverse l'échantillon (2) par sections est réglable de telle façon qu'aussi bien la lumière émise pour la stimulation de l'échantillon par la source de lumière 3 que la lumière de fluorescence émise par la substance à détecter contenue dans l'échantillon (2) est en grande partie absorbée par l'échantillon (2), et
- un dispositif d'évaluation (14) pour évaluer les différents spectres de fluorescence relevés, pour déterminer la concentration de la substance fluorescente sur la base des variations au moins des deux spectres de fluorescence relevés par le faisceau lumineux à différents intervalles, ainsi que du spectre relevé par le second dispositif de spectromètre (9).

2. Dispositif selon la revendication 1, **caractérisé en ce que** la lumière du faisceau lumineux a une longueur d'onde allant de 300 jusqu'à 450 nm, en particulier de 385 à 395 nm.

3. Dispositif selon l'une des revendications 1 ou 2, **caractérisé en ce que** le faisceau lumineux a un diamètre allant de 0,5 jusqu'à 4 mm.

4. Dispositif selon l'une des revendications 1 à 3, **caractérisé en ce que** la lumière est générée par un dispositif de diodes.

5. Dispositif selon l'une des revendications 1 à 4, **caractérisé en ce que** le local d'examen est formé par une cuvette.

6. Dispositif selon l'une des revendications 1 à 5, **caractérisé en ce que** la longueur du local d'examen mesurée dans la direction de la propagation du faisceau lumineux est variable de manière réglable.

7. Dispositif selon l'une des revendications 1 à 6, **caractérisé en ce que** l'intensité de la source de lumière est variable de manière réglable.
